# EUROPÄISCHE PATENTSCHRIFT

(11) **EP 1 803 044 B1**
(45) Veröffentlichungstag und Bekanntmachung des Hinweises auf die Patenterteilung: **18.07.2018**
(21) Anmeldenummer: 05789238.2
(22) Anmeldetag: 08.10.2005
(51) Int. Cl.: G05D 23/13

(54) **SANITÄRES THERMOSTATMISCHVENTIL**
SANITARY THERMOSTATIC MIXING VALVE
MITIGEUR THERMOSTATIQUE SANITAIRE

(30) Priorität: 20.10.2004 DE 102004050996
(43) Veröffentlichungstag der Anmeldung: 04.07.2007
(73) Patentinhaber: Hansa Armaturen GmbH, 70567 Stuttgart (DE)
(72) Erfinder: SCHMID, Lars, 72622 Nürtingen (DE)
(74) Vertreter: Ostertag & Partner Patentanwälte mbB
(86) Internationale Anmeldenummer: PCT/EP2005/010860
(87) Internationale Veröffentlichungsnummer: WO 2006/042656

(56) Entgegenhaltungen:
- EP-A- 0 745 798
- FR-A- 1 508 226

## Beschreibung

Die Erfindung betrifft ein sanitäres Thermostatmischventil nach dem Oberbegriff des Patentanspruchs 1.

Ein Thermostatmischventil der eingangs genannten Art ist beispielsweise aus der EP 0 973 083 B1 bekannt. Es wird im Sanitärbereich als thermostatischer Vormischer eingesetzt, mit dem die maximale Vorlauftemperatur für eine Sanitärarmatur voreingestellt werden kann.

Aus hygienischen Gründen, insbesondere um eine Ansiedlung von Legionellen zu vermeiden, müssen Sanitärarmaturen von Zeit zu Zeit thermisch desinfiziert werden. Dazu muss die Vorlauftemperatur an dem aus EP 0 973 083 B1 bekannten Vormischer durch einen Fachmann auf ca. 60° bis 70° C erhöht und nach erfolgtem Spülvorgang wieder neu eingestellt werden. Dies ist aufwendig und birgt die Gefahr, dass vergessen wird, die Vorlauftemperatur zurückzustellen, so dass sich Benutzer mit zu heißem Wasser verbrühen können.

Ein weiteres Thermostatventil der eingangs genannten Art ist aus der FR 1 508 226 A bekannt geworden. Mit Hilfe eines Steuerhebels wird der Temperatur-Sollwert des abgegebenen Wassers eingestellt. In einer Endstellung desselben wird nur heißes Wasser abgegeben, so dass bei ausreichend hoher Temperatur des Heißwassers thermische Desinfektion erfolgt. Ein Fachmann ist hierbei nicht erforderlich; allerdings kann danach der vorher eingestellte Temperatur-Sollwert nur ungefähr wieder eingestellt werden.

Es ist daher eine Aufgabe der Erfindung, ein Thermostatmischventil anzugeben, bei dem eine thermische Desinfektion einfach vorgenommen werden kann, ohne dass die Solltemperatureinstellung des Thermostatmischventils verändert werden muss.

Die Aufgabe wird gelöst durch ein Thermostatmischventil nach Anspruch 1. Vorteilhafte Ausgestaltungen sind den abhängigen Ansprüchen zu entnehmen.

Erfindungsgemäß ist also vorgesehen, dass ein unabhängig betätigbares Spülorgan vorgesehen ist, mit dem der Anschlag für das Thermostatelement zumindest soweit abgehoben werden kann, dass dieses den Warmwasserzulauf vollständig frei gibt, und außerdem das Einstellorgan arretierbar ist, so dass nach Zurückstellen des Spülorgans die Temperatur des Mischwassers wieder auf den voreingestellten Wert begrenzt wird. Durch beide Maßnahmen zusammen wird zuverlässig verhindert, dass der Temperatursollwert beim Betätigen des Spülorgans verändert wird.

Das Spülorgan besitzt vorteilhaft einen Anlüfthebel. Dieser ermöglicht eine einfache Bedienung.

Bei einer vorteilhaften Ausführungsform wird das Thermostatelement von einer Vorspannfeder gegen den Anschlag gehalten. Der Anschlag ist über eine Sicherheitsfeder an dem Einstellorgan abgestützt und der Anlüfthebel ist so ausgebildet, dass er bei Betätigung die Sicherheitsfeder zusammenspannt und das Thermostatelement von der Vorspannfeder in eine Position verschoben wird, in der das Mischventil den Warmwasserzulauf frei gibt.

Dies ermöglicht eine einfache und kompakte Bauform des Thermostatmischventils.

Bei einer alternativen Ausführungsform, bei der das Thermostatelement ebenfalls von einer Vorspannfeder gegen den Anschlag gehalten wird und der Anschlag über eine Sicherheitsfeder an dem Einstellorgan abgestützt ist, ist das Spülorgan so ausgebildet, daß es bei Betätigung die Sicherheitsfeder entspannt und das Regelelement auf diese Weise von der Vorspannfeder in eine Position verschoben wird, in der es den Warmwasserzulauf frei gibt.

Vorzugsweise ist eine abnehmbare Abdeckkappe vorgesehen, die im aufgesetzten Zustand das Einstellorgan verdeckt und die so bemessen ist, daß sie nur in der unbetätigten Stellung des Einstellorgans aufgesetzt werden kann.

Durch die Abdeckkappe ist die Funktion des Einstellorgans verdeckt und nur dem Fachpersonal zugänglich, so daß Benutzer nicht verleitet werden, an dem Thermostatmischventil herumzustellen. Durch die Bauform der Abdeckkappe wird zudem verhindert, daß nach erfolgter Spülung vergessen wird, das Einstellorgan wieder zurückzustellen.

Vorteilhaft ist eine Feststellschraube zum Arretieren des Einstellorgans vorgesehen. Dies verhindert wirksam, daß bei einem Spülvorgang versehentlich die Einstellung des Thermostatmischventils verstellt wird.

Bei einer weiteren bevorzugten Ausführungsform umfaßt das Spülorgan einen abnehmbaren Schlüssel. Eine Einstellung des Thermostatmischventils kann dadurch nur vom Fachpersonal vorgenommen werden, das im Besitz eines solchen Schlüssels ist.

Das erfindungsgemäße Thermostatmischventil kann sowohl als Vormischventil ausgebildet als auch in eine thermostatische Sanitärarmatur integriert sein.

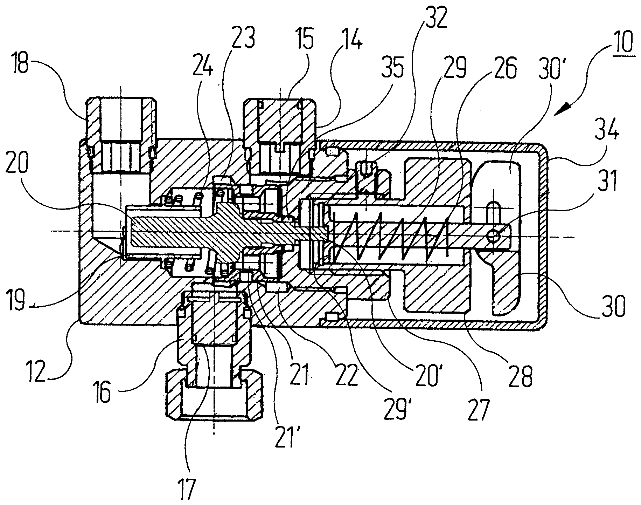

Im folgenden wird ein Ausführungsbeispiel der Erfindung anhand der Zeichnung näher erläutert. Die einige Figur zeigt einen Schnitt durch ein als Vormischventil ausgebildetes Thermostatmischventil.

Das Thermostatmischventil 10 besitzt ein Gehäuse 12 mit einem Warmwasserzulauf 16, einem Kaltwasserzulauf 14 und einem Mischwasserauslauf 18. Im Kaltwasserzulauf 14 ebenso wie im Warmwasserzulauf 16 befinden sich Rückschlagventile 15 bzw. 17, die verhindern, daß Wasser aus dem Thermostatmischventil 10 in die Zuführungsleitungen zurückströmen kann.

Im Inneren des Gehäuses 12 ist ein als Thermostatelement ausgebildetes Dehnstoffelement 20 angeordnet, das ein Mischventil betätigt. Das Dehnstoffelement 20 an sich bekannter Bauart, welches hier nur schematisch als kompaktes Bauteil dargestellt ist, enthält einen in einem Gehäuse untergebrachten Dehnstoff, beispielsweise ein Wachs, der sich bei Erwärmung ausdehnt und einen Druckstift 20' aus dem Gehäuse herausschiebt und bei Abkühlung zusammenzieht und so ein Zurückschieben des Druckstiftes 20' zuläßt.

Das von dem Dehnstoffelement 20 betätigte Mischventil weist eine an sich bekannte Bauart auf. Es umfaßt einen ersten Ringraum 23, in den Warmwasser aus dem Warmwasserzulauf 16 strömt, einen zweiten Ringraum 22, in den Kaltwasser aus dem Kaltwasserzulauf 14 strömt, und eine Regelhülse 21, die verschiebbar zwischen dem ersten und dem zweiten Ringraum 23, 22 angeordnet ist. Je nach Stellung der Regelhülse 21 verschließt sie mehr oder weniger einen Spalt zum Ringraum 23 und öffnet mehr oder weniger einen Spalt zum Ringraum 22 oder umgekehrt. Die Regelhülse 21 besitzt mehrere zylindrische achsparallele Bohrungen 21', durch die, wenn die Regelhülse 21 einen Spalt zum Ringraum 22 freigibt, Kaltwasser an dem Dehnstoffelement 20 vorbei durch eine Hülse 19, die als Mischraum dient, zum Mischwasserauslauf 18 fließen kann. Gibt die Regelhülse 21 einen Spalt zum Ringraum 23 frei, so kann Warmwasser durch die Hülse 19 zum Mischwasserauslauf 18 fließen.

Die Regelhülse 21 sitzt auf einer stufenförmig abgesetzten Nabe des Dehnstoffelements 20. Das mit Dehnstoff gefüllte linke Ende des Dehnstoffelementes 20 ragt in die Hülse 19 hinein und wird dort von Mischwasser angeströmt. Wärmeres Mischwasser sorgt so dafür, daß sich der Dehnstoff ausdehnt und der Druckstift 20' aus dem Dehnstoffelement 20 weiter herausgeschoben wird. Bei kälterem Mischwasser hingegen zieht sich der Dehnstoff zusammen und eine Vorspannfeder 24 sorgt dafür, daß das Dehnstoffelement 20 gegen den Druckstift 20' wieder in die in der Figur rechte Stellung verschoben wird.

Der Druckstift 20' drückt gegen einen Anschlag 29', der von einem tellerförmigen Ende einer Stange 29 gebildet wird, das von einer Sicherheitsfeder 26 gegen das Dehnstoffelement 20 gehalten wird. Die Sicherheitsfeder 29 hat eine große Federkonstante und kann im normalen Betrieb des Thermostatmischventils 10 als starr angenommen werden. Ihre Aufgabe besteht darin, eine Zerstörung des Dehnstoffelements 20 zu verhindern, wenn dieses bei maximaler Ausdehnung an der linken Seite auf dem Warmwassersitz am Ringraum 23 und auf der rechten Seite am Anschlag der Stange 29 sitzt. In diesem Fall gibt die Sicherheitsfeder 29 so viel nach, daß das Dehnstoffelement 20 nicht durch die eigene Ausdehnung am Anschlag kaputt gedrückt wird.

Wird der Druckstift 20' durch Ausdehnung des Dehnstoffs weiter aus dem Dehnstoffelement 20 herausgedrückt, so schiebt er das Dehnstoffelement 20 mit der Regelhülse 21 gegenüber dem Ende der Stange 29 nach links. Dadurch wird der Durchlaßspalt für Warmwasser am Ringraum 21 kleiner, der Durchlaßspalt für Kaltwasser am Ringraum 22 entsprechend größer. Es strömt somit mehr Kaltwasser und entsprechend weniger Warmwasser in den Mischraum der Hülse 19 und das Mischwasser wird kälter. Der Dehnstoff zieht sich dadurch wieder etwas zusammen und die Vorspannfeder 24 schiebt das Dehnstoffelement 20 und die Regelhülse 21 wieder ein wenig nach rechts, so daß wieder mehr Warmwasser und entsprechend weniger Kaltwasser in den Mischraum gelangt. Dies geschieht, bis sich ein Gleichgewicht entsprechend der eingestellten Solltemperatur eingestellt hat.

Stange 29 und Sicherheitsfeder 26 sind in der hohlen Achse eines Einstellgriffes 28 angeordnet, der zum Einstellen der Solltemperatur des Mischwassers dient. Der Einstellgriff 28 sitzt in einem Gewindeeinsatz 27 in dem Gehäuse 12 des Thermostatmischventils 10 und kann von Hand weiter in das Gehäuse 12 eingedreht oder aus diesem herausgedreht werden. Dies verändert die Position des Dehnstoffelements 20 in dem Thermostatmischventil 10 und damit die eingestellte Solltemperatur. Mit einem O-Ring 35 ist das Dehnstoffelement 20 gegen den Gewindeeinsatz 27 abgedichtet. Mit einer Madenschraube 32 mit Innensechskant kann der Einstellgriff 28 bei der gewünschten Solltemperatur arretiert werden um ein versehentliches Verstellen zu verhindern.

An dem äußeren Ende der Stange 29, das durch eine Bohrung aus dem Einstellgriff 28 herausragt, ist mit einem Zylinderstift 31 ein Anlüfthebel 30 beweglich befestigt. Der Zylinderstift 31 führt durch ein Langloch im Anlüfthebel 30. Der Anlüfthebel 30 liegt an der Stirnfläche des Einstellgriffs 28 an und kann über ein gerundetes Ende 30' gegen den Einstellgriff 28 verschwenkt werden. Da das gerundete Ende 30' des Anlüfthebels 30 länger als die halbe Breite des Anlüfthebels 30 ist, wird beim Schwenken des Anlüfthebels 30 die Stange 29 gegen die Federkraft der Sicherheitsfeder 26 aus dem Einstellgriff 28 herausgezogen und so der Gegenanschlag des Dehnstoffelementes 20 von diesem abgehoben. Da nun die Gegenkraft für die Vorspannfeder 24 fehlt, drückt diese das Dehnstoffelement 20 mit der Regelhülse 21 in die in der Zeichnung rechte Position, in der der Durchlaßspalt zum Ringraum 22 ganz geschlossen und der Durchlaßspalt zum Ringraum 23 ganz geöffnet ist. Somit kann nun Warmwasser mit der Vorlauftemperatur ungehindert durch den Mischraum zum Mischwasserauslauf 18 fließen. Da die Vorlauftemperatur in der Regel höher als die eingestellte Solltemperatur ist (60°-70° C), können nun Legionellen und andere Mikroorganismen abgetötet werden.

Während des normalen Betriebs verdeckt eine Abdeckkappe 34 den Einstellgriff 28 und den Anlüfthebel 30. Um eine Heißwasserspülung durchzuführen wird die Abdeckkappe 34 entfernt, die unverlierbar an einer Kette oder einem angegossenen Kunststoffaden hängt, und gibt den Anlüfthebel 30 frei. Der Anlüfthebel 30 kann nun betätigt werden. In betätigtem Zustand läßt sich die Abdeckkappe 34 nicht wieder aufsetzen. Dies verhindert, daß vergessen wird, den Anlüfthebel 30 nach erfolgter Heißwasserspülung wieder zurückzustellen. Wird der Anlüfthebel 30 wieder zurückgestellt, so begrenzt das Dehnstoffelement 20 die Temperatur des Mischwassers wieder auf den voreingestellten Wert. Die Schutzkappe 34 kann nun wieder aufgesetzt werden. Die Madenschraube 32 verhindert, daß beim Spülvorgang die Temperatureinstellung versehentlich verstellt wird.

Bei einer weiteren Ausführungsform ist der Anlüfthebel als abnehmbarer Schlüssel ausgeführt. Dadurch wird erreicht, daß nur Fachpersonal, welches im Besitz eines solchen Schlüssels ist, die Einstellung des Thermostatmischventil 10 verändern kann.

Im Ausführungsbeispiel ist das Thermostatmischventil 10 als Vormischventil ausgebildet, das vor einer normalen Sanitärarmatur installiert wird (nicht gezeigt). Das Vormischventil 10 wird unterhalb eines Waschtisches mit der Kaltwasser- und der Warmwasserleitung verbunden. Über ein T-Stück wird die Kaltwasserleitung zusätzlich direkt mit dem Kaltwasseranschluß der Sanitärarmatur oberhalb des Waschtisches verbunden. Der Warmwasseranschluß der Sanitärarmatur wird hingegen mit dem Mischwasserauslauf 18 des Vormischventils 10 verbunden. An der Sanitärarmatur kann somit Wasser von kalt bis zu der am Vormischventil eingestellten Maximaltemperatur gezapft werden. Solche Vormischventile kommen bevorzugt bei schutzbedürftigen Personen wie z.B. Kindern, Senioren und Behinderten zum Einsatz, um zu verhindern, daß diese Personen sich mit zu heiß eingestelltem Wasser verbrühen können.

Das erfindungsgemäße Thermostatmischventil kann aber auch in andere thermostatische Sanitärarmaturen integriert sein.

Zu der im Ausführungsbeispiel beschriebenen Ausführungsform, bei dem ein Anlüfthebel 30 die Sicherheitsfeder zusammenspannt, sind auch andere Alternativen möglich, um das Dehnstoffelement 20 in eine Spülstellung zu bewegen. So kann beispielsweise anstelle des Anlüfthebels 30 ein einrastbarer Deckel mit einem Handgriff auf dem Einstellgriff 28 vorgesehen sein, der mit einer halben Drehbewegung ausgeklinkt und herausgedreht werden kann und so die Sicherheitsfeder soweit entspannt, daß die Vorspannfeder 24 das Dehnstoffelement 20 in die Spülstellung schiebt. Nach erfolgter Heißwasserspülung wird der Deckel an dem Handgriff wieder gegen die Sicherheitsfeder durch eine halbe Drehung niedergedrückt und eingerastet.

## Patentansprüche

1. Sanitäres Thermostatmischventil mit
a) einem Gehäuse (12), das einen Kaltwasserzulauf (14), einen Warmwasserzulauf (16) und einen Mischwasserauslauf (18) aufweist;
b) einem im Gehäuse (12) angeordneten, temperaturempfindlichen und vom Mischwasser anströmbaren Thermostatelement (20), das sich normalerweise einseitig an einem Anschlag (29') abstützt;
c) einem vom Thermostatelement (20) gesteuerten Regelelement (21);
d) einem Einstellorgan (28) für die Solltemperatur des Mischwassers, mit dem die Position des Regelelements (21) im Gehäuse (12) veränderbar ist,
**dadurch gekennzeichnet, dass**
e) ein unabhängig betätigbares Spülorgan (30) vorgesehen ist, mit dem der Anschlag (29') für das Thermostatelement (20) zumindest soweit abgehoben werden kann, dass dieses den Warmwasserzulauf (16) vollständig frei gibt, und
f) das Einstellorgan (28) arretierbar ist, so dass nach Zurückstellen des Spülorgans (30) die Temperatur des Mischwassers wieder auf den voreingestellten Wert begrenzt wird.

2. Thermostatmischventil nach Anspruch 1, **dadurch gekennzeichnet, daß** das Spülorgan (30) einen Anlüfthebel umfaßt.

3. Thermostatmischventil nach Anspruch 2, **dadurch gekennzeichnet, daß** das Thermostatelement (20) von einer Vorspannfeder (24) gegen den Anschlag (29') gehalten wird und der Anschlag (29') über eine Sicherheitsfeder (26) an dem Einstellorgan (28) abgestützt ist und daß der Anlüfthebel (30) so ausgebildet ist, daß er bei Betätigung die Sicherheitsfeder (26) zusammenspannt und das Regelelement (21) von der Vorspannfeder (24) in eine Position verschoben wird, in der es den Warmwasserzulauf (16) frei gibt.

4. Thermostatmischventil nach Anspruch 1, **dadurch gekennzeichnet, daß** das Thermostatelement (20) von einer Vorspannfeder (24) gegen den Anschlag (29') gehalten wird und der Anschlag (29') über eine Sicherheitsfeder (26) an dem Einstellorgan (28) abgestützt ist und daß das Spülorgan (30), so ausgebildet ist, daß es bei Betätigung die Sicherheitsfeder (26) entspannt und das Regelelement (21) von der Vorspannfeder (24) in eine Position verschoben wird, in der es den Warmwasserzulauf (16) frei gibt.

5. Thermostatmischventil nach einem der vorhergehenden
Ansprüche, **gekennzeichnet durch** eine abnehmbare Abdeckkappe (34), die im aufgesetzten Zustand das Spülorgan (30) verdeckt und die so ausgebildet ist, daß sie nur in der unbetätigten Stellung des Spülorgans (30) aufsetzbar ist.

6. Thermostatmischventil nach einem der vorhergehenden
Ansprüche, **gekennzeichnet durch** eine Feststellschraube (32) zum Arretieren des Einstellorgans (28).

7. Thermostatmischventil nach einem der vorhergehenden
Ansprüche, **dadurch gekennzeichnet, daß** das Spülorgan (30) einen abnehmbaren Schlüssel umfaßt.

8. Thermostatmischventil nach einem der vorhergehenden
Ansprüche, welches als Vormischventil ausgebildet ist.

## Claims

1. Sanitary thermostatic mixing valve with
a) a housing (12), which has a cold water inlet (14), a hot water inlet (16) and a mixed water outlet (18);
b) a temperature-sensitive thermostatic element (20) disposed in the housing (12), against which element the mixed water flows and which element normally rests unilaterally on a stop (29');
c) a control element (21) controlled by the thermostatic element (20); and
d) an adjusting member (28) for the setpoint temperature of the mixed water, with which member the position of the control element (21) can be varied in the housing (12),
**characterized in that**
e) an independently operable flushing member (30) is provided, with which the stop (29') for the thermostatic element (20) can be raised at least to the extent that this completely opens the hot water inlet (16), and
f) the adjusting member (28) is lockable so that after resetting the flushing member (30) the temperature of the mixed water is limited to the preset value again.

2. Thermostatic mixing valve according to claim 1, **characterized in that** the flushing member (30) comprises a lifting lever.

3. Thermostatic mixing valve according to claim 2, **characterized in that** the thermostatic element (20) is held by a pretensioning spring (24) against the stop (29') and the stop (29') is supported via a safety spring (26) on the adjusting member (28) and that the lifting lever (30) is formed such that when operated it bends the safety spring (26) together and the control element (21) is moved by the pretensioning spring (24) into a position in which it opens the hot water inlet (16).

4. Thermostatic mixing valve according to claim 1, **characterized in that** the thermostatic element (20) is held by a pretensioning spring (24) against the stop (29') and the stop (29') is supported via a safety spring (26) on the adjusting member (28) and that the flushing member (30) is formed such that when operated it unbends the safety spring (26) and the control element (21) is moved by the pretensioning spring (24) into a position in which it opens the hot water inlet (16).

5. Thermostatic mixing valve according to one of the preceding claims, **characterized by** a removable covering cap (34), which when fitted conceals the flushing member (30) and which is formed so that it can only be fitted in the unactuated state of the flushing member (30).

6. Thermostatic mixing valve according to one of the preceding claims, **characterized by** a set screw (32) for locking the adjusting member (28).

7. Thermostatic mixing valve according to one of the preceding claims, **characterized in that** the flushing member (30) comprises a removable key.

8. Thermostatic mixing valve according to one of the preceding claims, which is formed as a premixing valve.

## Revendications

1. Mitigeur thermostatique sanitaire comprenant
a) un carter (12) pourvu d'une arrivée (14) d'eau froide, d'une arrivée (16) d'eau chaude et d'une sortie (18) d'eau mitigée ;
b) un élément thermostatique (20) thermosensible qui est logé dans ledit carter (12), contre lequel l'eau mitigée peut affluer, et qui prend normalement appui d'un côté contre une butée (29') ;
c) un élément de régulation (21) commandé par ledit élément thermostatique (20) ;
d) un organe de réglage (28), affecté à la température de consigne de l'eau mitigée et permettant de modifier l'emplacement dudit élément de régulation (21) dans ledit carter (12),
**caractérisé par le fait**
e) **qu'**il est prévu un organe de rinçage (30) pouvant être actionné indépendamment et par lequel la butée (29'), dédiée à l'élément thermostatique (20), peut être neutralisée au moins jusqu'à ce que ce dernier dégage intégralement l'arrivée (16) d'eau chaude, et
f) **que** l'organe de réglage (28) peut être arrêté de façon telle que la température de l'eau mitigée soit de nouveau limitée à la valeur préréglée après rappel dudit organe de rinçage (30).

2. Mitigeur thermostatique selon la revendication 1, **caractérisé par le fait que** l'organe de rinçage (30) inclut un levier d'équilibrage.

3. Mitigeur thermostatique selon la revendication 2, **caractérisé par le fait que** l'élément thermostatique (20) est maintenu contre la butée (29') par un ressort de précontrainte (24), et ladite butée (29') est en appui contre l'organe de réglage (28) par l'intermédiaire d'un ressort de sécurité (26) ; et **par le fait que** le levier d'équilibrage (30) est réalisé de telle sorte qu'il comprime ledit ressort de sécurité (26) lors d'un actionnement, et que l'élément de régulation (21) soit amené, par ledit ressort de précontrainte (24), à un emplacement auquel il dégage l'arrivée (16) d'eau chaude.

4. Mitigeur thermostatique selon la revendication 1, **caractérisé par le fait que** l'élément thermostatique (20) est maintenu contre la butée (29') par un ressort de précontrainte (24), et ladite butée (29') est en appui contre l'organe de réglage (28) par l'intermédiaire d'un ressort de sécurité (26) ; et **par le fait que** l'organe de rinçage (30) est réalisé de telle sorte qu'il soulage ledit ressort de sécurité (26) lors d'un actionnement, et que l'élément de régulation (21) soit amené, par ledit ressort de précontrainte (24), à un emplacement auquel il dégage l'arrivée (16) d'eau chaude.

5. Mitigeur thermostatique selon l'une des revendications précédentes, **caractérisé par** un capuchon amovible (34) qui recouvre l'organe de rinçage (30), à l'état mis en place, et est réalisé de telle sorte qu'il puisse être mis en place uniquement dans la position non actionnée dudit organe de rinçage (30).

6. Mitigeur thermostatique selon l'une des revendications précédentes, **caractérisé par** une vis (32) de consignation à demeure, conçue pour arrêter l'organe de réglage (28).

7. Mitigeur thermostatique selon l'une des revendications précédentes, **caractérisé par le fait que** l'organe de rinçage (30) inclut une clé amovible.

8. Mitigeur thermostatique selon l'une des revendications précédentes, réalisé sous la forme d'un prémélangeur.
